# EUROPEAN PATENT APPLICATION

(11) **EP 4 553 790 A1**
(43) Date of publication of application: **14.05.2025**
(21) Application number: 23209169.4
(22) Date of filing: 10.11.2023
(51) Int. Cl.: G06V 20/52

(54) **A METHOD OF DETECTING AN ALARM DETERRENT PLATE ON A SUBJECT BUILDING**

(30) Priority: 07.11.2023 PT 2023119029
(71) Applicant: NOS Inovação, S.A., 4460-191 Porto (PT)
(72) Inventor: Pinto Sequeira dos Santos Graça, Jorge Filipe, 4460-191 Senhora da Hora (PT); Nunes Ferreira, João Miguel, 4460-191 Senhora da Hora (PT); Ferreira Martins, Carlos Manuel, 4460-191 Senhora da Hora (PT); David Rechena, Pedro Miguel, 4460-191 Senhora da Hora (PT); Pimentel Fernandes Maio, Carolina, 4460-191 Senhora da Hora (PT); Soares Capitão, Pedro Miguel, 4460-191 Senhora da Hora (PT); Rodrigues Ferreira Melo, Orlando Duarte, 4460-191 Senhora da Hora (PT)
(74) Representative: do Nascimento Gomes, Rui

(57) **Abstract**

The present application relates to a method of detecting an alarm deterrent plate on a subject building. The method comprises the steps of obtaining street view imagery data from a street view imagery provider unit (1) and processing said data in a detection unit (2) using processing means (3) and AI detection means (4) trained for detecting alarm deterrent plates on subject buildings. The method therefore provides an agnostic hardware solution for automatically and assertively identify and map alarm deterrent plates based on street view imagery data.

## Description

### TECHNICAL FIELD

The present application belongs to the technical fields of digital imaging and information processing. More particularly, it relates to methods that perform image recognition on street view images.

### PRIOR ART

Alarm deterrent plates, also known as dissuasive plates, are plates that identify a building in which an alarm system is installed. These plates are not simply a logo, nor do they serve to advertise alarm companies, they are security elements that inform of the connection to an alarm receiving centre, contracted through an alarm company, therefore having a deterrent role. In fact, thieves tend to choose buildings where they can enter without the risk of being detected, and a property secured with an alarm system is not one of them. Consequently, having an alarm deterrent plate reduces the likelihood of theft.

Alarm deterrent plates are projected to meet a set of requirements related with graphic design (e.g., typeface, tone, alarm company logo, colour combinations) to make the plate easily recognisable, visible and legible from a certain distance, and material composition (e.g., use of high-strength materials) to allow the plate to withstand exposure to weathering. In terms of location, an alarm deterrent plate is to be affixed in strategic places, such as at the main entrances of a building, so that the plate can fulfil its deterrent role of alerting the thief to the existence of an alarm system in the area.

In this context, for an alarm company that offers surveillance services, it is important to have automatic and intelligent mapping of all installed alarm systems, for more effective management of their operation, especially with regard to maintenance procedures. Additionally, it would also be advantageous for these companies to be able to automatically identify buildings that do not yet have an alarm system installed, thus allowing them to identify new business opportunities.

The solutions offered by the state of the art are highly dependent on the use of dedicated cameras to acquire image data, which will be subsequently processed using OCR technology. This results in highly complex solutions, both in terms of hardware and software, which implies high implementation and maintenance costs.

As such, the state of the art does not disclose a solution that is hardware agnostic and that can still be able to automatically and assertively identify and map alarm deterrent plates.

The present solution intended to innovatively overcome such issues.

### SUMMARY

It is therefore an object of the present application a method of detecting an alarm deterrent plate on a subject building. Such method therefore provides an agnostic hardware solution for automatically and assertively identify and map alarm deterrent plates based on street view imagery data.

In an advantageous configuration of the method of the present application it is comprised by the steps of:
i. obtaining street view imagery data containing at least one street view image of a subject building;
ii. preprocessing said street view imagery data in order to select at least one candidate image from the at least one street view image of the subject building;
iii. applying at least one candidate image to an Artificial Intelligence engine, hereinafter referred to as AI engine, which has previously been trained, so as to identify an alarm deterrent plate on the subject building from the at least one candidate image; the AI engine having previously been trained with street view images of a plurality of buildings;
iv. analysing the at least one candidate image with the AI engine in order to detect an alarm deterrent plate in the subject building, thereby generating detection data.

More particularly, the step of preprocessing street view imagery data, includes at least: analysing the at least one street view image of the subject building in order to select at least one candidate image that has a field of view of 60°.

Since street view images with this feature represents the configuration with a more appropriate viewing angle, allowing to be obtained a better image quality and scope view ratio for each image, by feeding the AI engine with candidate images the effectiveness of detection process that is carried out is increased, both in terms of speed and efficiency.

### DESCRIPTION OF FIGURES

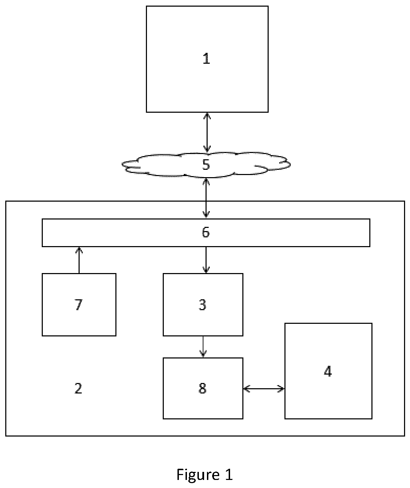

Figure 1 - representation of an embodiment of the system for implementing the method of detecting alarm deterrent plates on a subject building described in the present application. The reference signs represent:
1 - street view imagery provider;
2 - detection unit;
3 - processing module;
4 - Al module;
5 - wireless communication network;
6 - wireless interface module;
7 - address repository database;
8 - storage module.

### DETAILED DESCRIPTION

The more general and advantageous configurations of the method of the present application are described in the Summary. Such configurations are detailed below in accordance with other advantageous and/or preferred embodiments of implementation of the method.

The present application relates to a method for detecting alarm deterrent plates on a subject building, using street view imagery data provided by a street view imagery provider. This data is subsequently processed using computer vision algorithms adapted to identify alarm deterrent plates on subject buildings. In a complementary way, street view imagery data may also be used to determine the typology of each building. This implementation, as it does not use images obtained directly from dedicated cameras but instead use street view images collect and provided by a street view imagery provider, has the advantage of being agnostic in terms of hardware, thus allowing to quickly and effectively have an aggregated view of the number of buildings with surveillance, that is, with an alarm system installed, thus enabling more active management of each of them by alarm companies.

In the context of the present application, an alarm deterrent plate is a plate that meets the requirements established to configure an alarm deterrent plate, especially with regard to its graphic design, having a particular shape and presenting at least one alarm company logo and a specific colour combination. In particular, an alarm deterrent plate is generally rectangular in shape, and presents a specific colour configuration that, together with the logo, identifies the alarm company providing the surveillance service.

Alarm deterrent plates are to be installed in strategic places such as at the main entrances of a building, but not limited to this location, so that the plate can fulfil its deterrent role. A main entrance is typically the front entrance of any building, being characterized by having a main entrance door and other particular elements in the surroundings such as front steps, hand railings, entrance lights or door handles. Since it is the preferred entry point into a building, and in many building layout configurations it is even the only entry point of a building, this tends to be the ideal location for installing alarm deterrent plates.

Also in the context of this application, the term "subject building" is used to refer to a building that is to be analysed for the purpose of detecting the presence of an alarm deterrent plate. Generally, a building may have different designs and may come in a variety of sizes, forms and architectural styles. In this context, each building is characterized by its own typology, which is the set of physical characteristics that, in an urban context, distinguishes said building from the others. More particularly, it may refer to a classification that defines the type of housing based on a particular layout, number of rooms, division of areas, among other factors. This information is also important, as, when combined with the detection of an alarm deterrent plate, it allows alarm companies to have complete information regarding the subject building, which is especially advantageous for predicting and implementing maintenance procedures for the installed alarm systems.

A building is associated with a building address which provide means for physically locating the respective building. Typically, an address is a collection of information having a standard format, to inform the location of a building using street names as references, along with identifiers such as a building number, and/or special codes such as a postal code. Additionally, a building may also be located by means of a geographical location that may have a direct correspondence with the building address. Therefore, the information regarding a subject building address may be used to collect street view imagery data illustrating the respective subject building by querying the street view imagery provider (1) for street view imagery data associated with a correspondent geographical location.

In the context of the present application, a street view imagery provider (1) is a cloud-based mapping platform that provides street view imagery data. Such data is collected from street view placemarks, i.e., spots on a street, and for each placemark it is possible to obtain a 360° spherical view that may be broken down into, typically, four side views and one upward view. Thus, street view imagery data represents a compilation of interactive panoramic street view images, taken from positions along a street network and associated with a respective geographical location, that are able to depict the built environment and to provide data to support urban-related analysis. More specifically, from a set of street view images illustrating a particular subject building, it may be possible to extract the building facade in order to assess, for example, building structure and typology, and to detect the presence of particular objects that may be identified from such images, such as alarm deterrent plates affixed to the facade.

A street view image has a fixed size viewport and has a specific field of view, defining the camera angle in relation to the horizontal plane which was used for capturing the image. More particularly, when dealing with fixed-size viewport, the parameter field of view in essence represents zoom. By default, a field of view of a street view image may be set to 90°, with smaller degrees indicating a higher level of zoom. In the present case, for the purpose to be achieved with the solution described in this application, it was found that using street view images with a field of view of 60° is advantageous, since it allows a better quality/scope view ratio to be obtained. Those street view images, illustrating subject buildings with a field of view of 60°, are referred to as candidate images, which are subject to a subsequently processing stage in order to detect the present of alarm deterrent plates on said subject buildings.

The method described in the present application are implemented over a wireless communication network (5). Said network (5) interconnects all computational modules used to implement the method for data transmission, storage and processing purposes.

### EMBODIMENTS

In one embodiment of the method of detecting an alarm deterrent plate on a subject building described in the present application, it is comprised by a plurality of steps.

In a first step of the method, street view imagery data, containing at least one street view image of a subject building, is obtained. Said street view imagery data may be obtained from Google Street View^{™}.

In a second step of the method the street view imagery data obtained in the first step is pre-processed in order to select at least one candidate image from the at least one street view image of the subject building. More particularly, the step of preprocessing street view imagery data, includes at least analysing the at least one street view image of the subject building in order to select at least one candidate image that has a field of view of 60°.

Subsequently, in a third step of the method, at least one candidate image is applied to an AI engine, which has previously been trained, so as to identify an alarm deterrent plate on the subject building from the at least one candidate image. The AI engine was trained with street view images of a plurality of buildings.

Finally, in a fourth step of the method, said candidate images are analysed by the AI engine in order to detect an alarm deterrent plate in the subject building, thereby generating detection data.

The method may be implemented in a cloud-based infrastructure, allowing that all constituent elements to be connected through a communication network (5), favouring the transmission and processing of street view imagery data, for the purpose of detecting alarm deterrent plates. More specifically, in this way it is possible to obtain street view imagery data directly from a street view imagery provider (1), thus avoiding the implementation of a more complex hardware architecture that would include dedicated cameras to collect said imagery data. Consequently, in a first advantage to be obtained with the method described in the present application, it is possible to develop a solution for the detection of alarm deterrent plates that is hardware agnostic.

Additionally, the preprocessing stage in the second step of the method, executed on the street view imagery data, allows the selection of street view images that meet the specific criteria of having a field of view of 60°. This aspect is very important since a street view image with this feature represents the configuration with a more appropriate viewing angle, allowing a better image quality and scope view ratio provided by each image.

Therefore, feeding the AI engine with candidate images, i.e, street view images that have a field of view of 60°, the effectiveness of detection process that is carried out is increased, both in terms of speed and efficiency.

In another embodiment of the method, the first step of obtaining street view imagery data may further include:
- accessing to a list of subject building addresses; and
- obtaining street view imagery data associated with each subject building address of the list.

With this embodiment, mapping of alarm systems installed only in a certain geographical area, defined through subject building addresses, may be achieved in a structured way. This implementation scheme allows to obtain a versatile solution that can adapt to different mapping requirements and application scenarios.

In another embodiment of the method, it further comprises the steps of
- storing candidate images in a data repository;
- applying a candidate image stored in the data repository to the AI engine.

The data repository may be Google Cloud Storage^{™}.

In another embodiment of the method, it further comprises:
- training the AI engine by inputting a training dataset, comprised by street view images as training images, to the AI engine.

In another embodiment of the method, the training of the AI engine comprises:
- training the AI engine to detect alarm deterrent plate types, including applying a training dataset including training images of different types of alarm deterrent plates to the AI engine, the different types of alarm deterrent plates including one or a combination of logos, shapes, colours and printed characters.

The training dataset may be generated by performing at least the following steps:
- labelling street view images contained in the street view imagery data, according to at least one class representation of alarm deterrent plates.

As such, each class may represent an alarm company, which is characterized by presenting an alarm deterrent plate with a unique shape, logo and respective combination of colours. In this way, it is possible not only to detect an alarm deterrent plate but also which alarm company it belongs to.

Additionally, the generation of the training dataset may include:
- randomly splitting each street view image into a plurality of sub-images;
- resizing each sub-image so that a size of a sub-image is equal to a size of the street view image;
- incorporating the resized sub-images with the street view images, in order to generate the training dataset.

With this processing scheme, it is possible to obtain more images to form the training dataset and to train the AI engine. Said images, due to resizing, are able to illustrate larger alarm deterrent plates, facilitating the identification of these elements for training purposes.

In another embodiment of the method, the training of the AI engine further comprises:
- training the AI engine to detect a main entrance of the subject building, including training the AI engine to detect the main entrance from training images of buildings having at least one of:
   - a door knocker, doorbell, door handle or a lock;
   - front steps, hand railings, entrance lights.

A main entrance is typically the front entrance of any building and it is the preferred entry point into a building. Consequently, being the ideal location for installing alarm deterrent plates, by processing street view imagery data in order to identify the main entry of a subject building, it is possible to optimize computational resources, focusing detection processing in the areas adjacent to it.

Additionally, the training of the AI engine may comprise:
- training the AI engine to detect building types including applying training images of different building types to the AI engine; the different building types including different building typologies.

Therefore, it is possible to obtain an automatic mapping of alarm systems installed by a given alarm company, associating information relating to the detection of an alarm deterrent plate with information relating to the typology of the subject building.

In another embodiment of the method, it further comprises:
- storing detection data resulting from the execution of the fourth step of the method, in a table storage;
- querying detection data from the table storage in order to integrate it into an analytic service in order to generated analytic data;
- providing a user interface visualization tool to output analytic data.

An external analytic service may be a data visualization and reporting platform that is used to perform business intelligence analysis. An example of an external analytic service is Power BI^{™}.

The present application also relates to a system for detecting an alarm deterrent plate on a subject building, that is configured to operate the method of detecting an alarm deterrent plate on a subject building already described. Said system, as illustrated by Figure 1 may comprise a detection unit (2), including a processing module (3) and an AI module (4), and a wireless communication network (5) configured to establish a bidirectional data communication protocol adapted to at least obtain street view imagery data from a street view imagery provider (1). In this regard, the detection unit (2) may further comprise a wireless interface module (6) configured to support download of street view imagery data. Such data is to be processed by the modules (3, 4) of the detection unit (2), according to the method described in the present application, in order to detect the presence of an alarm deterrent plate on a subject building being illustrated by the street view imagery data. Additionally, the detection unit (2) may further comprise an address repository database (7) for storing subject building addresses, which may be used to download street view imagery data that has a correspondent geographical location. The detection unit (2) may further comprise a storage module (8) for storing candidate images, that have a field of view of 60°, which are selected from the processing stage executed by the processing module, and which will feed the AI module (4).

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A method of detecting an alarm deterrent plate on a subject building, the method comprising:
i. obtaining street view imagery data containing at least one street view image of a subject building;
ii. preprocessing said street view imagery data in order to select at least one candidate image from the at least one street view image of the subject building;
iii. applying at least one candidate image to an AI engine, which has previously been trained, so as to identify an alarm deterrent plate on the subject building from the at least one candidate image; the AI engine having previously been trained with street view images of a plurality of buildings;
iv. analysing the at least one candidate image with the AI engine in order to detect an alarm deterrent plate in the subject building, thereby generating detection data;
wherein,
the step of preprocessing street view imagery data, includes at least:
analysing the at least one street view image of the subject building in order to select at least one candidate image that has a field of view of 60°.

2. The method according to claim 1, wherein the step of obtaining street view imagery data includes:
- accessing to a list of subject building addresses;
- obtaining street view imagery data associated with each subject building address of the list.

3. The method according to claim 1 or 2, further comprising:
- storing candidate images in a data repository;
- applying a candidate image stored in the data repository to the AI engine.

4. The method according to any of the previous claims, further comprising:
- training the AI engine by inputting a training dataset, comprised by street view images as training images, to the AI engine.

5. The method according to any of the previous claim 4, wherein the training of the AI engine comprises:
- training the AI engine to detect alarm deterrent plate types, including applying a training dataset including training images of different types of alarm deterrent plates to the AI engine, the different types of alarm deterrent plates including one or a combination of logos, shapes, colours and printed characters.

6. The method according to claim 5, wherein the training dataset is generated by performing at least the following steps:
- labelling street view images contained in the street view imagery data, according to at least one class representation of alarm deterrent plates.

7. The method according to any of the previous claims 4 to 6, wherein the training dataset is generated by performing the following steps:
- randomly splitting each street view image into a plurality of sub-images;
- resizing each sub-image so that a size of a sub-image is equal to a size of the street view image;
- incorporating the resized sub-images with the street view images, in order to generate the training dataset.

8. The method according to any of the previous claims 4 to 7, wherein the training of the AI engine further comprises:
- training the AI engine to detect a main entrance of the subject building, including training the AI engine to detect the main entrance from training images of buildings having at least one of:
- a door knocker, doorbell, door handle or a lock;
- front steps, hand railings, entrance lights.

9. The method according to claim 8, wherein the training of the AI engine comprises:
- training the AI engine to detect building types including applying training images of different building types to the AI engine; the different building types including different building typologies.

10. The method according to any of the previous claims, further comprising:
- storing the detection data in a table storage;
- querying detection data from the table storage in order to integrate it into an analytic service in order to generated analytic data;
- providing a user interface visualization tool to output analytic data.

11. The method according to claim 10, wherein the analytic service is Power BI^{™}.

12. The method according to claim 3, wherein the data repository is Google Cloud Storage^{™}.

13. The method according to any of the previous claims, wherein street view imagery data is obtained from Google Street View^{™}.

14. A system for detecting an alarm deterrent plate on a subject building, the system comprising a communication network adapted to interconnect a plurality of processing and storage modules; each of said modules being configured to operate according to the method of detecting an alarm deterrent plate on a subject building of any of the previous claims 1 to 13.
